# EUROPEAN PATENT SPECIFICATION

(11) **EP 3 785 395 B1**
(45) Date of publication and mention of the grant of the patent: **27.04.2022**
(21) Application number: 19720542.0
(22) Date of filing: 26.04.2019
(51) Int. Cl.: H04L 9/08, H04L 9/32, H04L 29/06, H04W 12/04

(54) **METHOD AND SYSTEM FOR KEY MANAGEMENT**
VERFAHREN UND SYSTEM ZUR SCHLÜSSELVERWALTUNG
PROCEDE ET SYSTEME DE GESTION DE CLEFS

(30) Priority: 27.04.2018 TW 107114460
(43) Date of publication of application: 03.03.2021
(73) Proprietor: LYDSEC DIGITAL TECHNOLOGY CO., LTD., Taipei City 11085 (TW); Lin, Maw-Tsong, 42668 Västra Frölunda (SE)
(72) Inventor: SKYGEBJERG, Per, 411 18 Gothenburg (SE)
(74) Representative: Stöckeler, Ferdinand
(86) International application number: PCT/EP2019/060724
(87) International publication number: WO 2019/207101

(56) References cited:
- US-A1- 2015 242 602
- US-A1- 2016 080 157
- US-A1- 2017 257 363
- US-B1- 9 455 968

## Description

The disclosure relates to a method and a system for key management.

In modern cryptography, managing one or more keys used in encrypting information is an important task. For example, in asymmetric key cryptography, a public key private key pair is employed for encryption and decryption. When the private key is known by a third party, the encrypted information may be exposed to the third party. Therefore, efforts have been made to ensure the safety of the private key. For example, the safety issues in key management include dealing with generation and storage of the keys. Further, another safety issue is secure retrieval of the keys in the case that a device storing the keys is not available.

In the related art, US 2016/0080157 A1 discloses a network authentication method that is used for secure electronic transactions. In the method, a private key and a public key are utilized for verifying a digital signature before authorizing a transaction. US 9 455 968 B1 discloses a method for protecting secret on a mobile device. In the method, a cryptographic key for accessing the data stored in the mobile device is recreated using a secret splitting algorithm. US 2015/0242602 A2 discloses a network authentication method for secure user identity verification. In the method, a verification server verifies an identity of a user using user login data and positioning information of a user terminal. US 2017/0257363 A1 discloses a mechanism for implementing two-factor authentication on a mobile device. In the method, an authentication appliance generates a reference shared secret, and instructs a user to provide a secret. Then, the authentication appliance compares the reference shared secret with the user-provided secret to determine whether to provide the user with access to protected resource.

One object of the disclosure is to provide a method and a system for key management that can provide the effect such as safe storage of keys, data certification, key recovery, etc., and a system that is capable of implementing the above-mentioned method.

The invention provides a method according to claim 1 and a system according to claim 9. Further developments of the invention are defined in the dependent claims.

Other features and advantages of the disclosure will become apparent in the following detailed description of the embodiments with reference to the accompanying drawings, of which:
Figure 1 is a block diagram illustrating a system for key management according to one embodiment of the disclosure;
Figure 2 is a flow chart illustrating steps of a registration process in a method for key management according to one embodiment of the disclosure;
Figure 3 illustrates authentication data stored in a verification server and backup data stored in a data server after the registration process;
Figure 4 is a flow chart illustrating steps of a certification process in the method for key management according to one embodiment;
Figure 5 is a flow chart illustrating sub-steps for generating a key request;
Figure 6 is a flow chart illustrating sub-steps for obtaining a personal identification number (PIN);
Figure 7 is a block diagram illustrating a system for key management according to one embodiment of the disclosure;
Figure 8 is a flow chart illustrating steps of a recovery process in the method for key management according to one embodiment; and
Figure 9 illustrates an interface displayed by for mobile device allowing a user to input information.

Before the disclosure is described in greater detail, it should be noted that where considered appropriate, reference numerals or terminal portions of reference numerals have been repeated among the figures to indicate corresponding or analogous elements, which may optionally have similar characteristics.

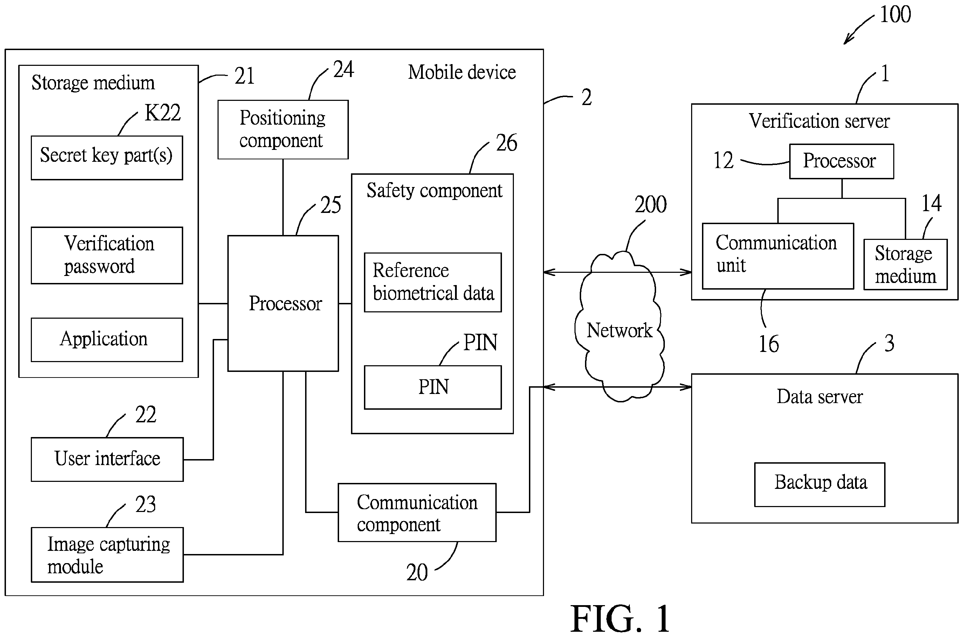

Figure 1 is a block diagram illustrating a system 100 for key management according to one embodiment of the disclosure.

In this embodiment, the system 100 includes a verification server 1, a mobile device 2 and a data server 3. The mobile device 2 may be configured to communicate with the verification server 1 and the data server 3 over a network 200 (e.g., the Internet).

The verification server 1 may be embodied using a computer device, and includes a processor 12, a storage medium 14 and a communication unit 16.

The processor 12 may include, but not limited to, a single core processor, a multi-core processor, a dualcore mobile processor, a microprocessor, a microcontroller, a digital signal processor (DSP), a field-programmable gate array (FPGA), an application specific integrated circuit (ASIC), and/or a radiofrequency integrated circuit (RFIC), etc.

The storage medium 14 may be embodied using one or more of a hard disk, a solid-state drive (SSD) and other non-transitory storage medium.

The communication unit 16 may include a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G) and/or fourth generation (4G) of wireless mobile telecommunications technology, and/or the like.

The mobile device 2 may be embodied using a smart phone, a laptop, a tablet computer, etc., and includes a communication component 20, a storage medium 21, a user interface 22, an image capturing module 23, a positioning component 24 and a processor 25. In some embodiments, the mobile device 2 may further include a safety component 26. In some embodiments, the safety component 26 is an external device that may be coupled to the mobile device 2 to communicate with the mobile device 2. In some embodiments, the safety component 26 is a built-in component of the mobile device 2 (e.g., a microcontroller chip that may serve as an embedded secure element).

The communication component 20 may include a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G) and/or fourth generation (4G) of wireless mobile telecommunications technology, and/or the like.

The storage medium 21 may be embodied using flash memory or other non-transitory storage medium, and stores software applications therein. The user interface 22 may be embodied using a touch screen. The image capturing module 23 may be embodied using a camera. The positioning component 24 may be embodied using a global positioning system (GPS) component.

The processor 25 may include, but not limited to, a single core processor, a multi-core processor, a dualcore mobile processor, a microprocessor, a microcontroller, a digital signal processor (DSP), a field-programmable gate array (FPGA), an application specific integrated circuit (ASIC), and/or a radiofrequency integrated circuit (RFIC), etc.

The data server 3 may be embodied using a cloud server that is configured to receive and store data that can be accessed using the mobile device 2. Additionally, the mobile device 2 may be configured to transmit data to the data server 3 for storage.

In use, when a user is using the mobile device 2, one or more keys may be employed in various applications such as an online bank account, a digital wallet, a bitcoin address, etc.

When the user intends to protect a key (such as a private key that forms an asymmetric key pair with a public key), he/she may operate the mobile device 2 to execute a specific software application (e.g., a key management application provided by a software provider) stored in the storage medium 21 so as to initiate a registration process.

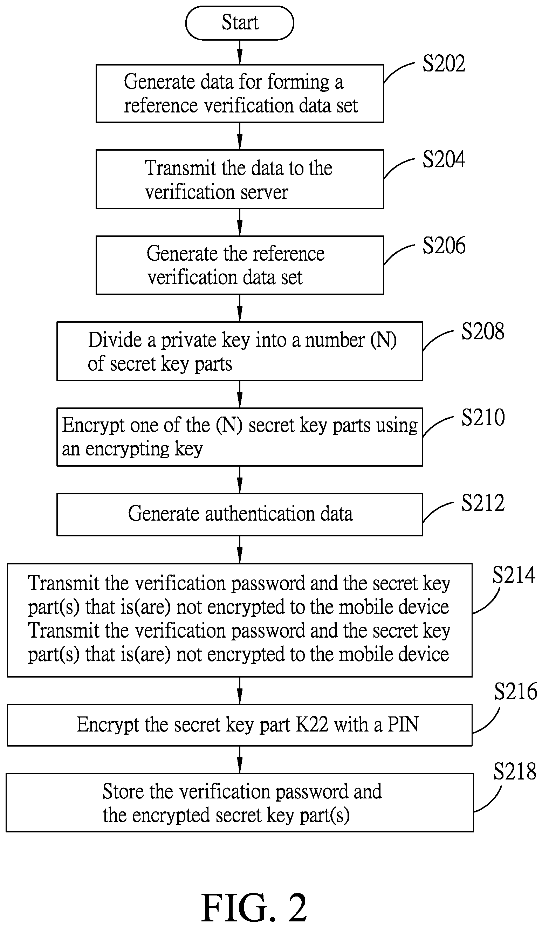

Figure 2 is a flow chart illustrating steps of the registration process according to one embodiment not according to the invention of the disclosure.

In step S202, the processor 25 executing the specific software application generates data for forming a reference verification data set. In this embodiment, the data generated by the processor 25 in step S202 includes reference hardware identification data, reference location data, reference image data, reference biometrical data, and a unique user identifier (UID) that is associated with a registered user (e.g., the user of the mobile device 2 in this case).

Specifically, the processor 25 may perform a scanning operation on one of the hardware components of the mobile device 2 in order to obtain the reference hardware identification data which may include one or more unique characteristics of the one of the hardware components so as to identify the one of the hardware components. The processor 25 may generate the reference location data that includes a current location of the mobile device 2 detected by the positioning component 24. The processor 25 may control the image capturing module 23 to capture a desired image (e.g., an image of a scene near the current location of the mobile device 2) to serve as a registered image associated with the registered user, and generate the reference image data using the registered image (e.g., the reference image data may include the registered image). In another embodiment, the processor 25 may generate the reference image data using an image already stored in the mobile device 2 or an image uploaded from elsewhere into the mobile device 2. The processor 25 may control the image capturing module 23 to capture an image of a part of the user (e.g., eyes, fingerprint, face, etc.), and generate the reference biometrical data using the image of the part of the user.

In step S204, the processor 25 controls the communication component 20 to transmit the data generated in step S202 to the verification server 1.

In response to receipt of the data from the mobile device 2, in step S206, the verification server 1 generates the reference verification data set, for example, by packing into a data package the reference hardware identification data associated with one of the hardware components of the mobile device 2, the reference location data indicating a location at which the mobile device 2 has been located, the reference image data associated with the registered image captured by the mobile device 2, and a reference verification password that may be generated randomly by the processor 25. In some embodiments, the reference location data may indicate several different locations.

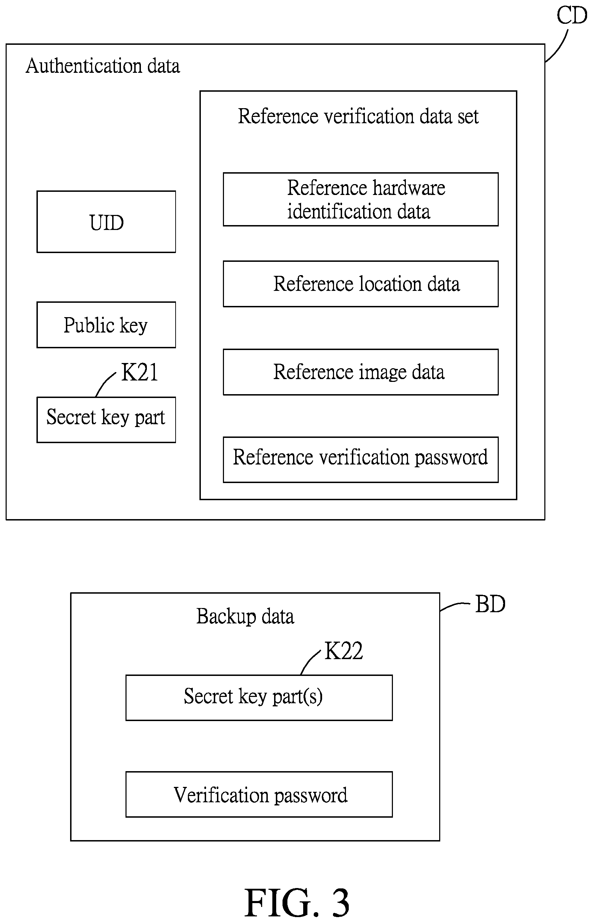

In step S208, the verification server 1 may generate an asymmetric key pair including a public key and a private key. Then, the verification server 1 may divide the private key into a number (N) of secret key parts. In this embodiment, N=2, but may be an integer larger than 2 in other embodiments. As a result, two secret key parts (referred to as K21 and K22 hereinafter, see Figure 3) may be obtained.

In step S210, the verification server 1 encrypts one of the (N) secret key parts (e.g., the secret key part K21) using an encrypting key. Then, in step S212, the verification server 1 generates authentication data, for example, by packing the reference verification data set, the UID, the public key, and the encrypted secret key part K21 into a data package. The authentication data is assigned to the user of the mobile device 2.

In step S214, the verification server 1 transmits the verification password and the secret key part(s) that is(are) not encrypted to the mobile device 2 (e.g., the secret key part K22).

The mobile device 2 encrypts the secret key part(s) received from the verification server 1. For example, in the embodiment of the registration process shown in Figure 2, in step S216, the user may operate the mobile device 2 to encrypt the secret key part K22 with a personal identification number (PIN) that is inputted by the user via the user interface (touch screen) 22. In cases that a plurality of secret key parts are received, the user may operate the mobile device 2 to encrypt each of the received secret key parts using the PIN inputted by the user. Then, in step S218, the mobile device 2 stores the verification password and the encrypted secret key part(s) of step S216 in the storage medium 21. In some embodiments, the mobile device 2 may further store the reference biometrical data and the PIN in the safety component 26.

In this manner, the private key is divided into multiple parts, encrypted separately, and stored at different locations. Ideally, it should be difficult for a third party to obtain the complete and decrypted private key.

In one embodiment, the generation of the asymmetric key pair may be done by the mobile device 2. As such, the mobile device 2 may divide the private key into a number (N) of secret key parts, and transmit one of the secret key parts (e.g., K21) to the verification server 1 for encryption and storage. The one of the secret key parts is stored in encrypted form in the verification server 1.

In one embodiment, after receiving and storing the verification password, the mobile device 2 may generate backup data that is associated with the registered user and that includes the encrypted secret key part(s) stored by the mobile device 2 and the verification password. For example, the mobile device 2 is configured to pack the encrypted secret key part(s) stored therein and the verification password into a data package (see Figure 3). Afterward, the mobile device 2 may transmit the backup data to the data server 3 such that the data server 3 may store the backup data therein.

After the registration process is completed, the authentication data is stored in the verification server 1, and the backup data is stored in the data server 3.

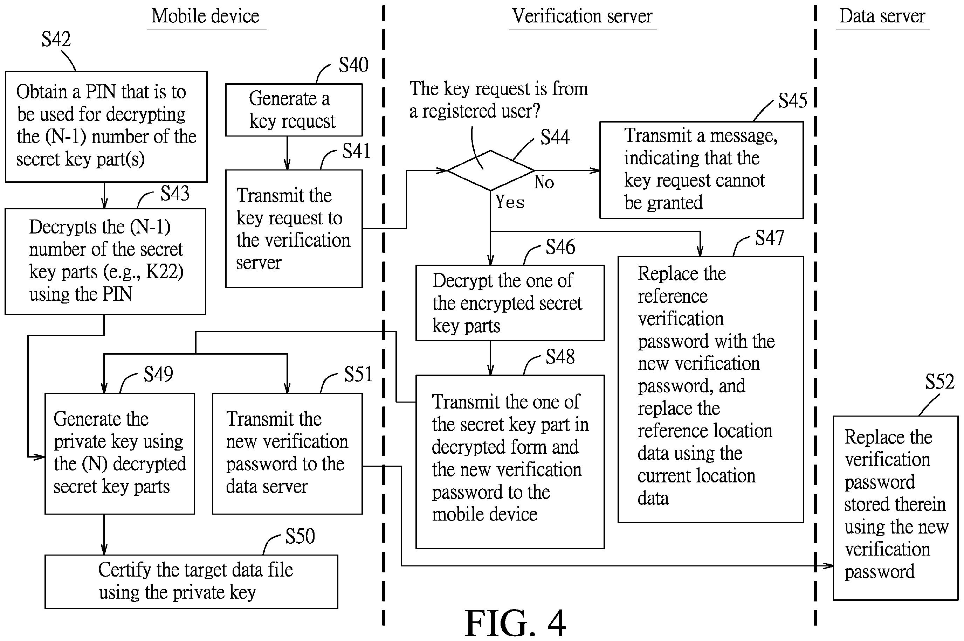

Figure 4 is a flow chart illustrating steps of a certification process in a method for key management according to one embodiment not according to the invention. In this embodiment, the certification process is implemented using the system as shown in Figure 1.

In one example, the user of the mobile device 2 may intend to certify (sign) a target data file in the mobile device 2 (e.g., to sign data associated with a transaction). As such, the private key may be used in certifying the target data file.

In step S40, in initiating the certification process, the user operates the mobile device 2 to generate a key request and to transmit the key request to the verification server 1. In this embodiment, the key request includes the UID and an identification data set.

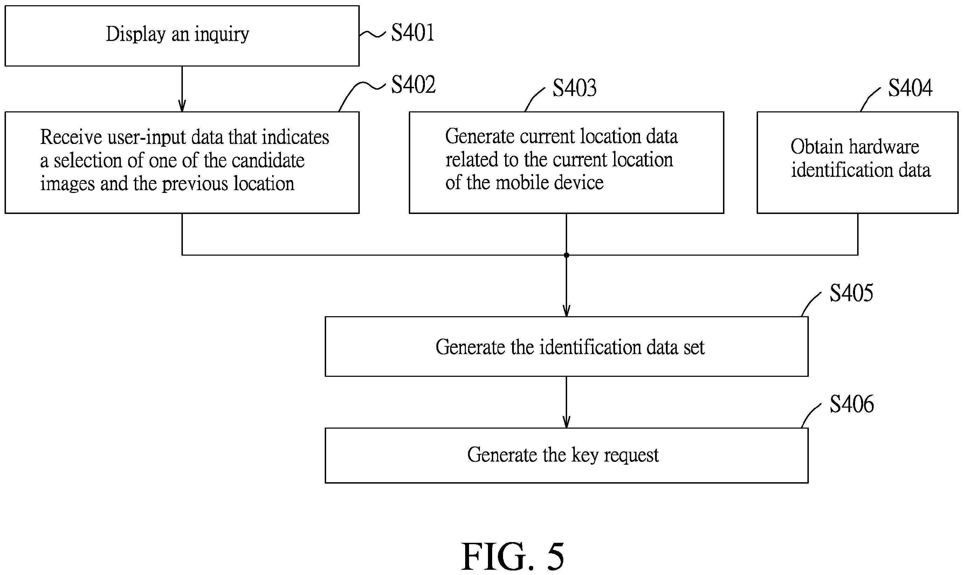

Specifically, the operations of step S40 may be illustrated in the sub-steps S401-S406 shown in Figure 5.

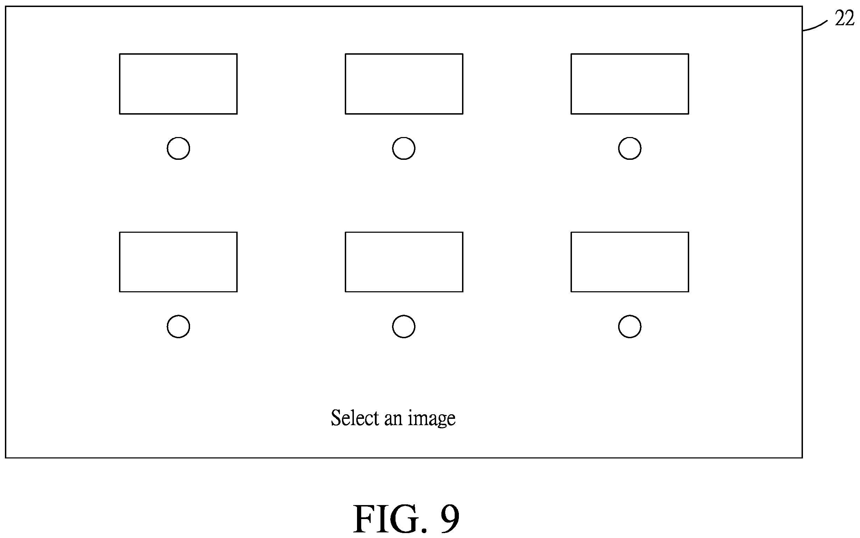

In sub-step S401, in response to receipt of a command from the user, the processor 25 controls the touch screen 22 to display an inquiry. Specifically, the mobile device 2 may first receive a plurality of candidate images including the registered image from the verification server 1. Then, as shown in Figure 9, the processor 25 controls the touch screen 22 to display the candidate images and an instruction for the user to select the registered image from among the candidate images and to input a previous location. The previous location may be a location where the registration process was implemented (i.e., where the registered image was captured). In some embodiments, the previous location may be a location where the certification process was implemented last time.

Then, in sub-step S402, the mobile device 2 receives user-input data that indicates a selection of one of the candidate images (image data) and the previous location (location data) via the touch screen 22.

In sub-step S403, the processor 25 controls the positioning component 24 to obtain a current location of the mobile device 2, and generates current location data related to the current location of the mobile device 2.

In sub-step S404, the processor 25 scans the one of the hardware components of the mobile device 2 to obtain hardware identification data. It is noted that sub-steps S402 to S404 may be carried out in an arbitrary order, or simultaneously.

In sub-step S405, the processor 25 generates the identification data set to include the hardware identification data obtained in sub-step S404, the verification password stored in the storage medium 21, and the image data and the location data that are obtained in sub-step S402. For example, the processor 25 packs the hardware identification data, the verification password, the image data and the location data into a data package as the identification data set.

In sub-step S406, the processor 25 generates the key request that includes the current location data, the UID and the identification data set.

In step S41, the mobile device 2 transmits the key request to the verification server 1 through the network 200.

In step S44, in response to receipt of the key request, the verification server 1 verifies the identification data set included in the key request for determining whether the key request is from a registered user.

Specifically, verifying the identification data set includes comparing the hardware identification data, the verification password included in the identification data set, the image data and the location data with the reference hardware identification data, the verification password stored in the verification server 1, the reference image data and the reference location data, respectively. When the hardware identification data, the verification password included in the identification data set, the image data and the location data are respectively identical to the reference hardware identification data, the verification password stored in the verification server 1, the reference image data and the reference location data, the verification server 1 determines that the key request is from a registered user.

When it is determined that the key request is from a registered user, the flow proceeds to steps S46 and S47, which may be carried out in an arbitrary order, or simultaneously. Otherwise, the flow proceeds to step S45, in which the verification server 1, to the mobile device 2.

In step S46, the verification server 1 decrypts the one of the encrypted secret key parts (i.e., K21) to generate the one of the secret key parts in decrypted form.

In step S47, the verification server 1 generates a new verification password, replaces the reference verification password with the new verification password, and replaces the reference location data using the current location data.

In step S48, the verification server 1 transmits the one of the secret key part in decrypted form and the new verification password to the mobile device 2.

In step S42, the mobile device 2 obtains a PIN that is to be used for decrypting the (N-1) number of the secret key part(s) stored in encrypted form in the mobile device 2. It is noted that steps S40 and S42 may be carried out in an arbitrary order, or simultaneously.

The PIN may be obtained by the mobile device 2 in a number of ways. For example, the processor 25 may control the touch screen 22 to display a message instructing the user to input the PIN.

In response to receipt of a user-input PIN, the processor 25 compares the user-input PIN and the PIN from the safety component 26. When it is determined that the user-input PIN is identical to the PIN from the safety component 26, the processor 25 decrypts the (N-1) number of the secret key parts using the PIN.

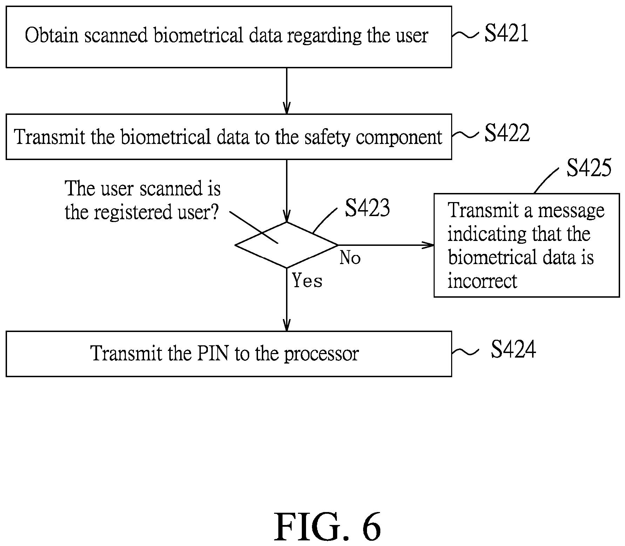

In cases where the safety component 26 is available (e.g., as a peripheral device), the operations of step S42 may be illustrated in the sub-steps shown in Figure 6.

In sub-step S421, the processor 25 controls the image capturing module 23 to capture an image of the user (also known as "scanning" the user), so as to obtain scanned biometrical data regarding the user.

In sub-step S422, the processor 25 transmits the biometrical data to the safety component 26.

In sub-step S423, the safety component 26 determines whether the user scanned in sub-step S421 is the registered user. Specifically, the safety component 26 is configured to compare the scanned biometrical data received in sub-step S422 with the reference biometrical data stored therein. When it is determined that the biometrical data received in sub-step S422 is identical to the reference biometrical data stored therein (that is, the user is confirmed as the registered user), the flow proceeds to sub-step S424, in which the safety component 26 transmits the PIN to the processor 25. Otherwise, the flow proceeds to sub-step S425, in which the safety component 26 transmits a message, indicating that the biometrical data is incorrect, to the mobile device 2. The processor 25 may in turn repeat sub-step S421 to obtain the biometrical data again. In some embodiments, the processor 25 may record a count of consecutive incorrect entries of biometrical data, and terminate the process when the count reaches a predetermined limit (e.g., 3 or 5 times).

In step S43, the processor 25 decrypts the (N-1) number of the secret key parts (e.g., K22) stored in the mobile device 2 using the PIN obtained in step S42, so as to obtain the (N-1) number of the secret key parts in decrypted form.

Afterward, in step S49, the processor 25 generates the private key using the (N) decrypted secret key parts.

In step S50, the user is able to operate the mobile device 2 to certify the target data file using the private key. Afterward, the processor 25 clears the record of the private key after the certification is performed on the target data file. It is noted that in this embodiment, the operations of "clearing the record" refer to erasing the related data (e.g., using data erasure software) such that the record of the private key cannot be recovered after being cleared.

In some embodiments, after step S50, the mobile device 2 transmits the target data file that has been certified to the verification server 1 for further use (e.g., the verification server 1 may be configured to verify the certified target data file using the public key) .

In some embodiments, in response to the user-input PIN, the processor 25 proceeds to decrypt the (N-1) secret key part(s) without verifying whether the user-input PIN is correct. In such a case, when the user-input PIN is incorrect (i.e., not identical to the PIN used for encrypting the (N-1) secret key part(s)), the private key generated in step S49 would be incorrect as well, and the verification server 1 would not be able to verify the certified target data file using the public key. As a result, the verification server 1 may transmit a message to the mobile device 2 indicating that verification of the certified target data file fails.

In some embodiments, in response to receipt of the new verification password, the processor 25 may replace the verification password stored in the mobile device 2 using the new verification password, and transmit the new verification password to the data server 3 in step S51.

In step S52, in response to receipt of the new verification password, the data server 3 replaces the verification password stored therein using the new verification password.

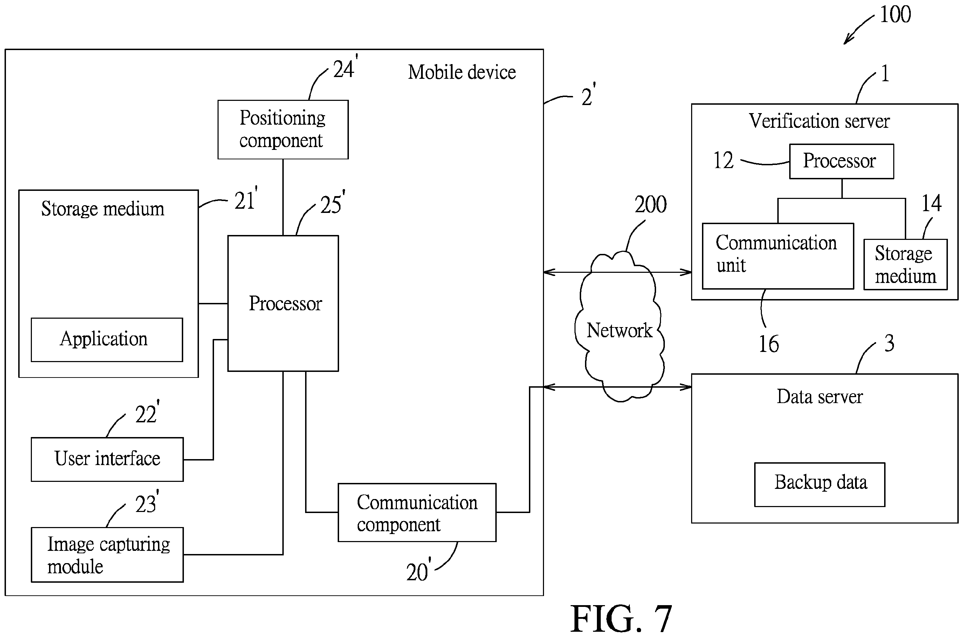

Figure 7 is a block diagram illustrating a system for key management, according to one embodiment of the disclosure.

In this embodiment, a mobile device 2' is used instead of the mobile device 2, and is capable of communicating with the verification server 1 and the data server 3 over the network 200. The mobile device 2' may be embodied using a device that is similar to the mobile device 2, and includes a communication component 20', a storage medium 21', a user interface 22' (e.g., a touch screen), an image capturing module 23', a positioning component 24' and a processor 25'. In some embodiments, the mobile device 2' may further include a safety component 26'. The storage medium 21' stores a specific software application as described in the embodiment of Figure 1. The specific software application, when executed by the processor 25', causes the processor 25' to perform operations as described below.

This embodiment is used to illustrate the case where the mobile device 2, which is used in the registration process, becomes unavailable (e.g., is lost, malfunctions, etc.), and the private key is intended to be used using the mobile device 2'.

As such, before using the private key, the user may operate the mobile device 2' to initiate a recovery process with the verification server 1 and the data server 3.

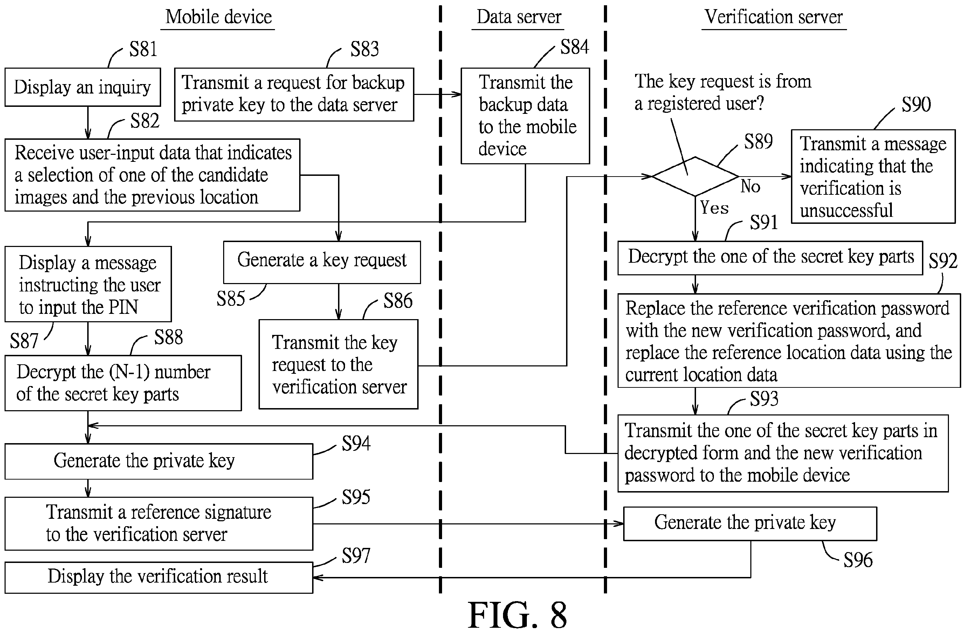

Figure 8 is a flow chart illustrating steps of the recovery process according to one embodiment of the disclosure.

In step S81, in response to receipt of a command from the user, the processor 25' controls the touch screen 22' to display an inquiry. Specifically, the mobile device 2' may first receive a plurality of candidate images (including the registered image) and a plurality of candidate locations (including a previous location indicated by the reference location data) from the verification server 1. Then, the processor 25' controls the touch screen 22' to display the candidate images and an instruction for the user to select the registered image from among the candidate images, and the previous location from among the candidate locations where the certification process was implemented last time.

In step S82, the mobile device 2' receives user-input data that indicates a selection of one of the candidate images and a selection of one of the candidate locations via the touch screen 22'.

In step S83, the processor 25' controls the communication component 20' to transmit a request for backup private key to the data server 3.

It is noted that step S81 and S83 may be carried out in an arbitrary order, or simultaneously.

In step S84, in response to receipt of the request for backup private key, the data server 3 transmits the backup data to the mobile device 2'. In some embodiments, the data server 3 may first initiate a verification process to verify the identity of the user (e.g., request the user to input a username/password set) before transmitting the backup data to the mobile device 2'.

In step S85, the processor 25' generates a key request. Specifically, the key request includes the UID (which may be provided by the user via the touch screen 22'), image data associated with the image selected by the user in step S82, location data associated with the location selected by the user in step S82, and the verification password included in the backup data received from the data server 3. It is noted that the content in the key request generated in the recovery process is different from the content in the key request generated in the method as shown in Figure 4.

In step S86, the processor 25' controls the communication component 20 to transmit the key request to the verification server 1.

In step S87, the processor 25' controls the touch screen 22' to display a message instructing the user to input the PIN. It is noted that step S85 and S87 may be carried out in an arbitrary order, or simultaneously.

In response to receipt of a user-input PIN, in step S88, the processor 25' decrypts the (N-1) number of the secret key parts in encrypted form (e.g., K22) with the user-input PIN to obtain (N-1) number of decrypted secret key part(s).

In step S89, the verification server 1 determines whether the key request is sent from the registered user. Specifically, the verification server 1 compares the verification password included in the key request, the image data and the location data with the verification password stored in the verification server 1, the reference image data and the reference location data associated with the UID included in the key request, respectively.

When the verification password, the image data and the location data are respectively identical to the verification password stored in the verification server 1, the reference image data and the reference location data, the verification server 1 determines that the key request is sent from the registered user, and the flow proceeds to step S91. Otherwise, the flow proceeds to step S90, in which the verification server 1 transmits a message to the mobile device 2' indicating that the verification is unsuccessful.

In step S91, the verification server 1 decrypts the one of the secret key parts (i.e., K21) to generate the one of the secret key parts in decrypted form.

In step S92, the verification server 1 generates a new verification password, replaces the reference verification password with the new verification password, and replaces the reference location data using the current location data.

In step S93, the verification server 1 transmits the one of the secret key parts in decrypted form and the new verification password to the mobile device 2'.

In step S94, the processor 25' generates the private key using the total (N) number of decrypted secret key parts.

After the private key is obtained, the user may further verify whether the private key is authentic. Specifically, in step S95, the user may operate the mobile device 2' to generate a reference signature based on the private key generated in step S94, and to transmit the reference signature to the verification server 1.

In step S96, the verification server 1 verifies the reference signature using the public key to obtain a verification result, and transmits the verification result to the mobile device 2'.

In step S97, the processor 25' controls the touch screen 22' to display the verification result indicating that the PIN received in step S87 is correct or incorrect. When the PIN is correct (i.e., the private key is authentic), the recovery process is completed. Otherwise, the flow may go back to step S87.

In some embodiments, the processor 25' may record a count of consecutive incorrect PIN entries, and terminate the process when the count reaches a predetermined limit (e.g., 3 or 5 times).

After the private key is recovered, the user may operate the mobile device 2' to initiate the registration process again to update the authentication data stored in the verification server 1, and to update the backup data stored in the data server 3.

Afterward, the user may operate the mobile device 2' to initiate the certification process as shown in Figure 4.

To sum up, the embodiments of the disclosure provide a method and a system that are configured to divide a private key in an asymmetric key pair into a plurality (e.g., the number (N)) of secret key parts, to distribute storage of the secret key parts in both the mobile device 2 and the verification server 1. In one embodiment, one of the secret key parts is encrypted and stored in the verification server 1, and the remaining (N-1) secret key part(s) is/are encrypted using the PIN and stored in the mobile device 2. In such a case, when the private key is to be generated, the user initiating the relevant process needs to not only identify the image and the location used in the registration process, but also possess the biometrical data in order to obtain the correct PIN, in order to obtain the correct private key.

Furthermore, the method and the system are configured to enable a recovery process in which the registered user is enabled to operate a different mobile device 2' for recovering the private key when the original mobile device 2 used in the registration process is not available.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure.

## Claims

1. A method for key management, the method being implemented using a system (100) that includes a mobile device (2) and a verification server (1) communicating with the mobile device (2) over a network, the method including:
generating and storing, by the verification server (1), authentication data that is assigned to a user of the mobile device (2), the authentication data including a unique user identifier, UID, a public key that forms an asymmetric key pair with a private key, one of a number N of secret key parts that constitute the private key, and a reference verification data set, the one of the secret key parts being stored in encrypted form;
storing, by the mobile device (2), the remaining N-1 number of the secret key parts in encrypted form, each of the N-1 number of the secret key parts being encrypted using a personal identification number, PIN;
in response to user operation of initiating a certification process to certify a target data file in the mobile device (2), generating and transmitting, by the mobile device (2), a key request to the verification server (1), the key request including the UID and an identification data set;
in response to receipt of the key request, verifying, by the verification server (1), the identification data set for determining whether the key request is from a registered user;
after it is determined that the key request is from a registered user, decrypting, by the verification server (1), the one of the secret key parts stored therein and transmitting the one of the secret key parts thus decrypted to the mobile device (2);
decrypting, by the mobile device (2), the remaining N-1 number of the secret key parts;
generating, by the mobile device (2), the private key using the N number of secret key parts thus decrypted;
certifying, by the mobile device (2), the target data file using the private key thus generated; and
clearing the record of the private key after the certification process;
the method **characterized in that**:
the PIN is a user-input number received by the mobile device (2) in a registration process; and
the method further comprises receiving and storing, by the mobile device (2), a verification password generated by the verification server (1);
the reference verification data set of the authentication data includes reference hardware identification data associated with a hardware component of the mobile device (2), reference location data indicating a location at which the mobile device (2) has been located, reference image data associated with a registered image captured by the mobile device (2), and a reference verification password;
generating the identification data set includes
scanning the hardware component of the mobile device (2) to obtain hardware identification data,
retrieving the verification password stored in the mobile device (2),
in response to a user-operation, obtaining image data and location data, and
generating the identification data set using the hardware identification data, the verification password, the image data and the location data; and
verifying the identification data set includes
comparing the hardware identification data, the verification password included in the identification data set, the image data and the location data with the reference hardware identification data, the verification password stored in the verification server (1), the reference image data and the reference location data, respectively, and
determining that the key request is from a registered user when the hardware identification data, the verification password included in the identification data set, the image data and the location data are respectively identical to the reference hardware identification data, the verification password stored in the verification server (1), the reference image data and the reference location data;
wherein:
the mobile device (2) is configured to generate current location data associated with a current location of the mobile device (2), and the key request further includes the current location data; and
when it is determined that the key request is from a registered user, the verification server (1) further replaces the reference location data using the current location data.

2. The method of Claim 1, the system (100) further including a data server (3), **characterized in that** the method further includes, after receiving and storing the verification password:
generating, by the mobile device (2), backup data that is associated with the registered user and that includes the remaining N-1 number of the secret key parts and the verification password;
transmitting, by the mobile device (2), the backup data to the data server (3); and
storing, by the data server (3), the backup data therein.

3. The method of Claim 2, **characterized in that** the method further includes, after it is determined that the key request is from the registered user:
generating, by the verification server (1), a new verification password;
replacing, by the verification server (1), the reference verification password with the new verification password; and
transmitting, by the verification server (1), the new verification password along with the one of the secret key parts thus decrypted to the mobile device (2) .

4. The method of Claim 3, **characterized in that** the method further includes:
in response to receipt of the new verification password, replacing, by the mobile device (2), the verification password stored therein using the new verification password, and transmitting the new verification password to the data server (3);
in response to receipt of the new verification password, replacing, by the data server (3), the verification password stored therein using the new verification password.

5. The method of Claim 1, **characterized in that** the method further includes, prior to generating the key request:
receiving, by the mobile device (2), a plurality of candidate images including the registered image from the verification server (1);
displaying, by the mobile device (2), the candidate images and an instruction for the user to select the registered image from among the candidate images and to input a previous location; and
receiving, by the mobile device (2), user-input data that indicates a selection of one of the candidate images and the previous location.

6. The method of Claim 1, **characterized in that** the method further includes:
obtaining, by the mobile device (2), reference biometrical data regarding the registered user during the registration process; and
storing, by the mobile device (2), the reference biometrical data and the PIN in a safety component (26) .

7. The method of Claim 6, **characterized in that** the method further includes:
scanning, by the mobile device (2), the user to obtain scanned biometrical data regarding the user;
comparing, by the mobile device (2), the scanned biometrical data and reference biometrical data to determine whether the user is the registered user;
when it is determined that the user is the registered user, obtaining, by the mobile device (2), the PIN from the safety component (26); and
decrypting, by the mobile device (2), the N-1 number of the secret key parts using the PIN.

8. The method of Claim 1, **characterized in that** the method further includes:
prior to decrypting the remaining N-1 number of the secret key parts, displaying, by the mobile device (2), a message instructing the user to input the PIN;
in response to receipt of a user-input PIN, comparing, by the mobile device (2), the user-input PIN and the PIN from the safety component (26); and
when it is determined that the user-input PIN is identical to the PIN from the safety component (26), decrypting, by the mobile device (2), the N-1 number of the secret key parts using the PIN.

9. A system (100) for key management, including a verification server (1) and a mobile device (2) communicating with said verification server (1) over a network, wherein:
said verification server (1) is configured to generate and store authentication data that is assigned to a user of said mobile device (2), the authentication data including a unique user identifier, UID, a public key that forms an asymmetric key pair with a private key, one of a number N of secret key parts that constitute the private key, and a reference verification data set, the one of the secret key parts being stored in encrypted form;
said mobile device (2) includes a storage medium (21), a user interface (22), and a processor (25) coupled to said storage medium (21) and said user interface (22), said storage medium (21) storing a software application and the remaining N-1 number of the secret key parts in encrypted form, each of the N-1 number of the secret key parts being encrypted using a personal identification number, PIN;
in response to user operation of initiating a certification process to certify a target data file in said mobile device (2), said processor (25) executing the software application is configured to generate and transmit a key request to the verification server (1), the key request including the UID and an identification data set ;
in response to receipt of the key request, said verification server (1) is configured to verify the identification data set for determining whether the key request is from a registered user;
after it is determined that the key request is from a registered user, said verification server (1) is configured to decrypt the one of the secret key parts stored therein and transmitting the one of the secret key parts thus decrypted to said mobile device (2);
in response to receipt of the one of the secret key parts thus decrypted, said mobile device (2) is configured to decrypt the remaining N-1 number of the secret key parts, generate the private key using the N number of secret key parts thus decrypted, certify the target data file using the private key thus generated, and clear the record of the private key after the certification process;
**characterized in that**:
said verification server (1) is configured to store the authentication data, and said the mobile device (2) is configured to store the remaining N-1 number of the secret key parts in a registration process;
the PIN is a user-input number received by said mobile device (2) in a registration process; and
said the mobile device (2) is further configured to receive and store a verification password generated by the verification server (1);
said mobile device (2) further includes an image capturing module and a positioning component connected to said processor;
the reference verification data set of the authentication data includes reference hardware identification data associated with a hardware component of said mobile device (2), reference location data indicating a location at which said mobile device (2) has been located, reference image data associated with a registered image captured by said image capturing module, and a reference verification password;
said mobile device (2) is configured to generate the identification data set by
scanning the hardware component of said mobile device (2) to obtain hardware identification data,
retrieving the verification password stored in said mobile device (2),
in response to a user-operation, obtaining image data and location data from said image capturing module and said positioning component, respectively, and
generating the identification data set using the hardware identification data, the verification password, the image data and the location data; and
said verification server (1) is configured to verify the identification data set by
comparing the hardware identification data, the verification password included in the identification data set, the image data and the location data with the reference hardware identification data, the verification password stored in said verification server (1), the reference image data and the reference location data, respectively, and
determining that the key request is from a registered user when the hardware identification data, the verification password included in the identification data set, the image data and the location data are respectively identical to the reference hardware identification data, the verification password stored in said verification server (1), the reference image data and the reference location data;
wherein said mobile device (2) is configured to generate current location data associated with a current location of said mobile device (2), and the key request further includes the current location data;
in response to receipt of the key request and after it is determined that the key request is from a registered user, said verification server (1) further replaces the reference location data using the current location data.

10. The system (100) of Claim 9, further including a data server (3), **characterized in that**:
after receiving and storing the verification password, said mobile device (2) is configured to generate backup data that is associated with the registered user and that includes the remaining N-1 number of the secret key parts and the verification password, and to transmit the backup data to the data server (3); and
in response to receipt of the backup data, said data server (3) is configured to store the backup data therein.

11. The system (100) of Claim 10, **characterized in that**, after it is determined that the key request is from the registered user:
said verification server (1) is configured to generate a new verification password, replace the reference verification password with the new verification password, and transmit the new verification password along with the one of the secret key parts thus decrypted to said mobile device (2).

12. The system (100) of Claim 11, **characterized in that**:
in response to receipt of the new verification password, said mobile device (2) is configured to replace the verification password stored therein using the new verification password, and transmit the new verification password to said data server (3);
in response to receipt of the new verification password, said data server (3) is configured to replace the verification password stored therein using the new verification password.

13. The system (100) of Claim 9, **characterized in that**, prior to generating the key request,
said mobile device (2) receives a plurality of candidate images including the registered image from the verification server (1) and is configured to display the candidate images and an instruction for the user to select the registered image from among the candidate images and to input a previous location, and
said mobile device (2) further receives user-input data that indicates a selection of one of the candidate images and the previous location.

14. The system (100) of Claim 9, **characterized in that** said mobile device (2) is further configured to obtain reference biometrical data regarding the registered user during the registration process, to store the reference biometrical data and the PIN in a safety component (26).

15. The system (100) of Claim 14, **characterized in that** said mobile device (2) is further configured to:
scan the user to obtain scanned biometrical data regarding the user;
compare the scanned biometrical data and reference biometrical data to determine whether the user is the registered user;
when it is determined that the user is the registered user, obtain the PIN from the safety component (26); and
decrypt the N-1 number of the secret key parts using the PIN.

16. The system (100) of Claim 9, **characterized in that**:
prior to decrypting the remaining N-1 number of the secret key parts, said mobile device (2) is configured to display a message instructing the user to input the PIN;
in response to receipt of a user-input PIN, said mobile device (2) is configured to compare the user-input PIN and the PIN from the safety component (26); and
when it is determined that the user-input PIN is identical to the PIN from the safety component (26), said mobile device (2) is configured to decrypt the N-1 number of the secret key parts using the PIN.

## Patentansprüche

1. Ein Verfahren zur Schlüsselverwaltung, wobei das Verfahren unter Verwendung eines Systems (100) implementiert ist, dass ein mobiles Gerät (2) und einen Verifizierungsserver (1), der mit dem mobilen Gerät (2) über ein Netzwerk kommuniziert, aufweist, wobei das Verfahren folgende Merkmale aufweist:
Erzeugen und Speichern, durch den Verifizierungsserver (1), von Authentifizierungsdaten, die einem Benutzer des mobilen Geräts (2) zugewiesen sind, wobei die Authentifizierungsdaten einen eindeutigen Benutzeridentifizierer, UID, einen öffentlichen Schlüssel, der ein asymmetrisches Schlüsselpaar mit einem privaten Schlüssel bildet, einen einer Anzahl N von geheimen Schlüsselteilen, die den privaten Schlüssel bilden, und einen Referenzverifizierungsdatensatz aufweisen, wobei der eine der geheimen Schlüsselteile in verschlüsselter Form gespeichert ist;
Speichern, durch das mobile Gerät (2), der übrigen Anzahl von N-1 geheimen Schlüsselteilen in verschlüsselter Form, wobei jeder der Anzahl von N-1 geheimen Schlüsselteilen unter Verwendung einer persönlichen Identifizierungsnummer, PIN, verschlüsselt ist;
ansprechend auf eine Benutzeroperation des Initiierens eines Zertifizierungsprozesses, um eine Zieldatendatei in dem mobilen Gerät (2) zu zertifizieren, Erzeugen und Übertragen, durch das mobile Gerät (2) einer Schlüsselanforderung an den Verifizierungsserver (1), wobei die Schlüsselanforderung den UID und einen Identifizierungsdatensatz aufweist;
ansprechend auf den Empfang der Schlüsselanforderung, Verifizieren, durch den Verifizierungsserver (1) des Identifizierungsdatensatzes zum Bestimmen, ob die Schlüsselanforderung von einem registrierten Benutzer stammt;
nachdem bestimmt wurde, dass die Schlüsselanforderung von einem registrierten Benutzer stammt, Entschlüsseln, durch den Verifizierungsserver (1), des einen der geheimen Schlüsselteile, der darin gespeichert ist, und Übertragen des einen der geheimen Schlüsselteile, der somit entschlüsselt ist, zu dem mobilen Gerät (2);
Entschlüsseln, durch das mobile Gerät (2), der restlichen Anzahl von N-1 geheimen Schlüsselteilen;
Erzeugen, durch das mobile Gerät (2), des privaten Schlüssels unter Verwendung der Anzahl von N somit entschlüsselten geheimen Schlüsselteilen;
Zertifizieren, durch das mobile Gerät (2), der Zieldatendatei unter Verwendung des somit erzeugten privaten Schlüssels; und
Löschen der Aufzeichnung des privaten Schlüssels nach dem Zertifizierungsprozess;
wobei das Verfahren **gekennzeichnet ist durch**:
die PIN ist eine Benutzer-Eingabe-Nummer, die **durch** das mobile Gerät (2) in einem Registrierungsprozess empfangen wird; und
das Verfahren umfasst ferner ein Empfangen und Speichern, **durch** das mobile Gerät (2), eines Verifizierungspassworts, das **durch** den Verifizierungsserver (1) erzeugt wird;
wobei der Referenzverifizierungsdatensatz der Authentifizierungsdaten Referenzhardware-Identifizierungsdaten aufweist, die einer Hardwarekomponente des mobilen Geräts (2) zugeordnet sind, Referenzortdaten, die einen Ort, an dem sich das mobile Gerät (2) befunden hat, anzeigen, Referenzbilddaten, die einem registrierten Bild, das **durch** das mobile Gerät (2) aufgenommen wurde, zugeordnet sind, und ein Referenz-Verifizierungspasswort aufweisen;
wobei das Erzeugen des Identifizierungsdatensatzes aufweist:
Scannen der Hardwarekomponente des mobilen Geräts (2), um Hardwareidentifizierungsdaten zu erhalten,
Wiedererlagen des Verifizierungspassworts, das in dem mobilen Gerät (2) gespeichert ist,
ansprechend auf eine Benutzeroperation, Erhalten von Bilddaten und Ortsdaten, und
Erzeugen des Identifizierungsdatensatzes unter Verwendung der Hardwareidentifizierungsdaten, des Verifizierungspassworts, der Bilddaten und der Ortsdaten; und
wobei das Verifizieren des Identifizierungsdatensatzes aufweist:
Vergleichen der Hardwareidentifizierungsdaten, des Verifizierungspassworts, das in dem Identifizierungsdatensatz enthalten ist, der Bilddaten und der Ortsdaten mit den Referenzhardware-Identifizierungsdaten, dem Verifizierungspasswort, das in dem Verifizierungsserver (1) gespeichert ist, den Referenzbilddaten beziehungsweise den Referenzortsdaten, und
Bestimmen, dass die Schlüsselanforderung von einem registrierten Benutzer stammt, wenn die Hardwareidentifizierungsdaten, das Verifizierungspasswort, das in dem Identifizierungsdatensatz enthalten ist, die Bilddaten und die Ortsdaten jeweils identisch zu den Referenzhardware-Identifizierungsdaten, dem Verifizierungspasswort, das in dem Verifizierungsserver (1) gespeichert ist, den Referenzbilddaten und den Referenzortsdaten ist;
wobei:
das mobile Gerät (2) konfiguriert ist, um momentane Ortsdaten, die einem momentanen Ort des mobilen Geräts (2) zugeordnet sind, zu erzeugen, und wobei die Schlüsselanforderung ferner die momentanen Ortsdaten aufweist; und
wenn bestimmt wird, dass die Schlüsselanforderung von einem registrierten Benutzer stammt, der Verifizierungsserver (1) ferner die Referenzortsdaten unter Verwendung der momentanen Ortsdaten ersetzt.

2. Das Verfahren nach Anspruch 1, bei dem das System (100) ferner einen Datenserver (3) aufweist, **dadurch gekennzeichnet, dass** das Verfahren ferner nach dem Empfangen und Speichern des Verifizierungspassworts Folgendes aufweist:
Erzeugen, durch das mobile Gerät (2), von Backupdaten, die dem registrierten Benutzer zugeordnet sind, und die die verbleibende Anzahl von N-1 geheimen Schlüsselteilen und das Verifizierungspasswort enthalten;
Übertragen, durch das mobile Gerät (2), der Backupdaten zu dem Datenserver (3); und
Speichern, durch den Datenserver (3), der Backupdaten in demselben.

3. Das Verfahren nach Anspruch 2, **dadurch gekennzeichnet, dass** das Verfahren nach dem Bestimmen, dass die Schlüsselanforderung von dem registrierten Benutzer stammt, Folgendes aufweist:
Erzeugen, durch den Verifizierungsserver (1), eines neuen Verifizierungspassworts;
Ersetzen, durch den Verifizierungsserver (1), des Referenz-Verifizierungspassworts durch das neue Verifizierungspasswort; und
Übertragen, durch den Verifizierungsserver (1), des neuen Verifizierungspassworts zusammen mit dem einen der geheimen Schlüsselteile, das somit entschlüsselt ist, zu dem mobilen Gerät (2).

4. Das Verfahren nach Anspruch 3, **dadurch gekennzeichnet, dass** das Verfahren ferner Folgendes aufweist:
ansprechend auf den Empfang des neuen Verifizierungspassworts, Ersetzen, durch das mobile Gerät (2), des darin gespeicherten Verifizierungspassworts unter Verwendung des neuen Verifizierungspassworts und Übertragen des neuen Verifizierungspassworts zu dem Datenserver (3);
ansprechend auf den Empfang des neuen Verifizierungspassworts, Ersetzen, durch den Datenserver (3), des darin gespeicherten Verifizierungspassworts unter Verwendung des neuen Verifizierungspassworts.

5. Das Verfahren gemäß Anspruch 1, **dadurch gekennzeichnet, dass** das Verfahren vor dem Erzeugen der Schlüsselanforderung Folgendes aufweist:
Empfangen, durch das mobile Gerät (2), einer Mehrzahl von Kandidatenbildern, die das registrierte Bild aufweisen, von dem Verifizierungsserver (1);
Anzeigen, durch das mobile Gerät (2), der Kandidatenbilder und eines Befehls für den Benutzer, das registrierte Bild unter den Kandidatenbildern auszuwählen und einen bisherigen Ort einzugeben; und
Empfangen, durch das mobile Gerät (2), von Benutzereingabedaten, die eine Auswahl des einen der Kandidatenbilder und des bisherigen Orts anzeigen.

6. Das Verfahren nach Anspruch 1, **dadurch gekennzeichnet, dass** das Verfahren ferner Folgendes aufweist:
Erhalten, durch das mobile Gerät (2), von biometrischen Referenzdaten bezüglich des registrierten Benutzers während des Registrierungsprozesses; und
Speichern, durch das mobile Gerät (2), der biometrischen Referenzdaten und der PIN in einer Sicherheitskomponente (26).

7. Das Verfahren nach Anspruch 6, **dadurch gekennzeichnet, dass** das Verfahren ferner Folgendes aufweist:
Scannen, durch das mobile Gerät (2), des Benutzers, um gescannte biometrische Daten bezüglich des Benutzers zu erhalten;
Vergleichen, durch das mobile Gerät (2), der gescannten biometrischen Daten und der biometrischen Referenzdaten, um zu bestimmen, ob der Benutzer der registrierte Benutzer ist;
wenn bestimmt wird, dass der Benutzer der registrierte Benutzer ist, Erhalten, durch das mobile Gerät (2), der PIN von der Sicherheitskomponente (26); und
Entschlüsseln, durch das mobile Gerät (2), der Anzahl von N-1 geheimen Schlüsselteilen unter Verwendung der PIN.

8. Das Verfahren nach Anspruch 1, **dadurch gekennzeichnet, dass** das Verfahren ferner Folgendes aufweist:
vor dem Entschlüsseln der verbleibenden Anzahl von N-1 geheimen Schlüsselteilen, Anzeigen, durch das mobile Gerät (2), einer Nachricht, die den Benutzer anweist, die PIN einzugeben;
ansprechend auf den Empfang einer Benutzereingabe-PIN, Vergleichen, durch das mobile Gerät (2), der Benutzereingabe-PIN und der PIN von der Sicherheitskomponente (26); und
wenn bestimmt wird, dass die Benutzereingabe-PIN identisch zu der PIN von der Sicherheitskomponente (26) ist, Entschlüsseln, durch das mobile Gerät (2), der Anzahl von N-1 geheimen Schlüsselteilen unter Verwendung der PIN.

9. Ein System (100) zur Schlüsselverwaltung, das einen Verifizierungsserver (1) und ein mobiles Gerät (2) aufweist, das mit dem Verifizierungsserver (1) über ein Netzwerk kommuniziert, wobei:
der Verifizierungsserver (1) konfiguriert ist, um Authentifizierungsdaten zu erzeugen und zu speichern, die einem Benutzer des mobilen Geräts (2) zugewiesen sind, wobei die Authentifizierungsdaten einen eindeutigen Benutzeridentifizierer, UID, einen öffentlichen Schlüssel, der ein asymmetrisches Schlüsselpaar mit einem privaten Schlüssel bildet, einen einer Anzahl von N geheimen Schlüsselteilen, die den privaten Schlüssel bilden, und einen Referenzverifizierungsdatensatz aufweisen, wobei der eine der geheimen Schlüsselteile in verschlüsselter Form gespeichert ist;
das mobile Gerät (2) ein Speichermedium (21), eine Benutzerschnittstelle (22) und einen Prozessor (25), der mit dem Speichermedium (21) und der Benutzerschnittstelle (22) gekoppelt ist, aufweist, wobei das Speichermedium (21) eine Softwareanwendung und die restliche Anzahl von N-1 geheimen Schlüsselteilen in verschlüsselter Form speichert, wobei jeder der Anzahl von N-1 geheimen Schlüsselteilen unter Verwendung einer persönlichen Identifizierungsnummer, PIN, verschlüsselt ist;
der Prozessor (25), der die Softwareanwendung ausführt, konfiguriert ist, um ansprechend auf eine Benutzeroperation des Initiierens eines Zertifizierungsprozesses, um eine Zieldatendatei in dem mobilen Gerät (2) zu zertifizieren, eine Schlüsselanforderung zu erzeugen und zu dem Verifizierungsserver (1) zu übertragen, wobei die Schlüsselanforderung den UID und einen Identifizierungsdatensatz aufweist;
der Verifizierungsserver (1) konfiguriert ist, um ansprechend auf den Empfang der Schlüsselanforderung den Identifizierungsdatensatz zu verifizieren, um zu bestimmen, ob die Schlüsselanforderung von einem registrierten Benutzer stammt;
der Verifizierungsserver (1) konfiguriert ist, um, nachdem bestimmt ist, dass die Schlüsselanforderung von einem registrierten Benutzer stammt, den einen der geheimen Schlüsselteile, der in demselben gespeichert ist, zu entschlüsseln und den somit entschlüsselten einen der geheimen Schlüsselteile zu dem mobilen Gerät (2) zu übertragen;
wobei das mobile Gerät (2) konfiguriert ist, um ansprechend auf den Empfang des somit entschlüsselten einen der geheimen Schlüsselteile die verbleibende Anzahl N-1 der geheimen Schlüsselteile zu entschlüsseln, den privaten Schlüssel unter Verwendung der Anzahl von somit entschlüsselten N geheimen Schlüsselteilen zu erzeugen, die Zieldatendatei unter Verwendung des somit erzeugten privaten Schlüssels zu zertifizieren, und die Aufzeichnung des geheimen Schlüssels nach dem Zertifizierungsprozess zu löschen;
**dadurch gekennzeichnet, dass**
der Verifizierungsserver (1) konfiguriert ist, um die Authentifizierungsdaten zu speichern, und das mobile Gerät (2) konfiguriert ist, um die verbleibende Anzahl von N-1 geheimen Schlüsselteilen in einem Registrierungsprozess zu speichern;
die PIN eine Benutzer-Eingabe-Nummer ist, die von dem mobilen Gerät (2) in einem Registrierungsprozess empfangen wird; und
das mobile Gerät (2) ferner konfiguriert ist, um ein Verifizierungspasswort, das durch den Verifizierungsserver (1) erzeugt wird, zu empfangen und zu speichern;
wobei das mobile Gerät (2) ferner ein Bildaufnahmemodul und eine Positionierungskomponente, die mit dem Prozessor verbunden sind, aufweist;
wobei der Referenzverifizierungsdatensatz der Authentifizierungsdaten Referenzhardware-Identifizierungsdaten, die einer Hardwarekomponente des mobilen Geräts (2) zugeordnet sind, Referenzortsdaten, die einen Ort, an dem sich das mobile Gerät (2) befunden hat, anzeigen, Referenzbilddaten, die einem registrierten Bild,
das durch das Bildaufnahmemodul aufgenommen wurde, zugeordnet sind, und ein Referenz-Verifizierungspasswort aufweisen;
wobei das mobile Gerät (2) konfiguriert ist, um den Identifizierungsdatensatz zu erzeugen, durch:
Scannen der Hardwarekomponente des mobilen Geräts (2), um Hardwareidentifizierungsdaten zu erhalten,
Wiedererlagen des Verifizierungspassworts, das in dem mobilen Gerät (2) gespeichert ist,
ansprechend auf eine Benutzeroperation, Erhalten von Bilddaten und Ortsdaten von dem Bildaufnahmemodul beziehungsweise der Positionierungskomponente, und
Erzeugen des Identifizierungsdatensatzes unter Verwendung der Hardwareidentifizierungsdaten, des Verifizierungspassworts, der Bilddaten und der Ortsdaten; und
wobei der Verifizierungsserver (1) konfiguriert ist, um den Identifizierungsdatensatz zu verifizieren, durch:
Vergleichen der Hardwareidentifizierungsdaten, des Verifizierungspassworts, das in dem Identifizierungsdatensatz enthalten ist, der Bilddaten und der Ortsdaten mit den Referenzhardware-Identifizierungsdaten, dem Verifizierungspasswort, das in dem Verifizierungsserver (1) gespeichert ist, den Referenzbilddaten beziehungsweise den Referenzortsdaten, und
Bestimmen, dass die Schlüsselanforderung von einem registrierten Benutzer stammt, wenn die Hardwareidentifizierungsdaten, das Verifizierungspasswort, das in dem Identifizierungsdatensatz enthalten ist, die Bilddaten und die Ortsdaten jeweils identisch mit den Referenzhardware-Identifizierungsdaten, dem Verifizierungspasswort, das in dem Verifizierungsserver (1) gespeichert ist, den Referenzbilddaten und den Referenzortsdaten sind;
wobei das mobile Gerät (2) konfiguriert ist, um momentane Ortsdaten, die einem momentanen Ort des mobilen Geräts (2) zugeordnet sind, zu erzeugen, wobei die Schlüsselanforderung ferner die momentanen Ortsdaten enthält;
wobei der Verifizierungsserver (1) ansprechend auf den Empfang der Schlüsselanforderung und nachdem bestimmt ist, dass die Schlüsselanforderung von einem registrierten Benutzer stammt, die Referenzortsdaten unter Verwendung der momentanen Ortsdaten ersetzt.

10. Das System (100) nach Anspruch 9, das ferner einen Datenserver (3) aufweist, **dadurch gekennzeichnet, dass**:
das mobile Gerät (2) konfiguriert ist, um nach dem Empfangen und dem Speichern des Verifizierungspassworts Backupdaten zu erzeugen, die dem registrierten Benutzer zugeordnet sind, und die die verbleibende Anzahl von N-1 geheimen Schlüsselteilen und das Verifizierungspasswort enthalten, und um die Backupdaten zu dem Datenserver (3) zu übertragen; und
der Datenserver (3) konfiguriert ist, um ansprechend auf den Empfang der Backupdaten die Backupdaten in demselben zu speichern.

11. Das System (100) nach Anspruch 10, **dadurch gekennzeichnet, dass** der Verifizierungsserver (1) konfiguriert ist, um, nachdem bestimmt ist, dass die Schlüsselanforderung von dem registrierten Benutzer stammt, ein neues Verifizierungspasswort zu erzeugen, das Referenz-Verifizierungspasswort durch das neue Verifizierungspasswort zu ersetzen, und das neue Verifizierungspasswort zusammen mit dem einen somit entschlüsselten der geheimen Schlüsselteile zu dem mobilen Gerät (2) zu übertragen.

12. Das System nach Anspruch 11, **dadurch gekennzeichnet, dass**:
das mobile Gerät (2) konfiguriert ist, um ansprechend auf den Empfang des neuen Verifizierungspassworts das in demselben gespeicherte Verifizierungspasswort unter Verwendung des neuen Verifizierungspassworts zu ersetzen, und das neue Verifizierungspasswort zu dem Datenserver (3) zu übertragen;
der Datenserver (3) konfiguriert ist, um ansprechend auf den Empfang des neuen Verifizierungspassworts das in demselben gespeicherte Verifizierungspasswort unter Verwendung des neuen Verifizierungspassworts zu ersetzen.

13. Das System (100) nach Anspruch 9, **dadurch gekennzeichnet, dass** vor dem Erzeugen der Schlüsselanforderung,
das mobile Gerät (2) eine Mehrzahl von Kandidatenbildern, die das registrierte Bild von dem Verifizierungsserver (1) enthalten, empfängt und konfiguriert ist, um die Kandidatenbilder und eine Anweisung an den Benutzer, das registrierte Bild unter den Kandidatenbildern auszuwählen und einen bisherigen Ort einzugeben, anzuzeigen, und
das mobile Gerät (2) ferner Benutzereingabedaten, die eine Auswahl von einem der Kandidatenbilder und des bisherigen Orts anzeigen, empfängt.

14. Das System (100) nach Anspruch 9, **dadurch gekennzeichnet, dass** das mobile Gerät (2) ferner konfiguriert ist, um biometrische Referenzdaten bezüglich des registrierten Benutzers während des Registrierungsprozesses zu erhalten, um die biometrischen Referenzdaten und die PIN in einer Sicherheitskomponente (26) zu speichern.

15. Das System (100) nach Anspruch 14, **dadurch gekennzeichnet, dass** das mobile Gerät ferner konfiguriert ist, um:
den Benutzer zu scannen, um gescannte biometrische Daten bezüglich des Benutzers zu erhalten;
die gescannten biometrischen Daten und biometrische Referenzdaten zu vergleichen, um zu bestimmen, ob der Benutzer der registrierte Benutzer ist;
wenn bestimmt wird, dass der Benutzer der registrierte Benutzer ist, die PIN von der Sicherheitskomponente (26) zu erhalten; und
die Anzahl von N-1 geheimen Schlüsselteilen unter Verwendung der PIN zu entschlüsseln.

16. Das System (100) nach Anspruch 9, **dadurch gekennzeichnet, dass**:
das mobile Gerät (2) konfiguriert ist, um vor dem Entschlüsseln der verbleibenden Anzahl von N-1 geheimen Schlüsselteilen eine Nachricht, die den Benutzer anweist, die PIN einzugeben, anzuzeigen;
das mobile Gerät (2) konfiguriert ist, um ansprechend auf den Empfang einer Benutzereingabe-PIN die Benutzereingabe-PIN und die PIN von der Sicherheitskomponente (26) zu vergleichen; und
das mobile Gerät (2) konfiguriert ist, um die Anzahl von N-1 geheimen Schlüsselteilen unter Verwendung der PIN zu entschlüsseln, wenn bestimmt wird, dass die Benutzereingabe-PIN identisch zu der PIN von der Sicherheitskomponente (26) ist.

## Revendications

1. Procédé de gestion de clés, le procédé étant mis en œuvre à l'aide d'un système (100) qui comporte un dispositif mobile (2) et un serveur de vérification (1) communiquant avec le dispositif mobile (2) à travers un réseau, le procédé comportant le fait de:
générer et mémoriser, par le serveur de vérification (1), les données d'authentification qui sont attribuées à un utilisateur du dispositif mobile (2), les données d'authentification comportant un identificateur d'utilisateur unique, UID, une clé publique qui forme une paire de clés asymétriques avec un clé privée, l'une d'un nombre N de parties de clé secrète qui constituent la clé privée, et un ensemble de données de vérification de référence, l'une des parties de clé secrète étant mémorisée de forme cryptée;
mémoriser, par le dispositif mobile (2), le nombre N-1 restant des parties de clé secrète de forme cryptée, chacune du nombre N-1 des parties de clé secrète étant cryptée à l'aide d'un numéro d'identification personnel, PIN;
en réaction à l'opération par l'utilisateur consistant à initier un processus de certification pour certifier un fichier de données cible dans le dispositif mobile (2), générer et transmettre, par le dispositif mobile (2), une demande de clé au serveur de vérification (1), la demande de clé comportant l'UID et un ensemble de données d'identification;
en réaction à la réception de la demande de clé, vérifier, par le serveur de vérification (1), l'ensemble de données d'identification pour déterminer si la demande de clé provient d'un utilisateur enregistré;
après qu'il a été déterminé que la demande de clé provient d'un utilisateur enregistré, décrypter, par le serveur de vérification (1), l'une des parties de clé secrète qui y est mémorisée et transmettre l'une des parties de clé secrète ainsi décryptée au dispositif mobile (2);
décrypter, par le dispositif mobile (2), le nombre N-1 restant des parties de clé secrète;
générer, par le dispositif mobile (2), la clé privée à l'aide du nombre N de parties de clé secrète ainsi décryptées;
certifier, par le dispositif mobile (2), le fichier de données cible à l'aide de la clé privée ainsi générée; et
effacer l'enregistrement de la clé privée après le processus de certification;
le procédé étant **caractérisé par le fait que**:
le PIN est un numéro d'entrée d'utilisateur reçu par le dispositif mobile (2) au cours d'un processus d'enregistrement; et
le procédé comprend par ailleurs le fait de recevoir et de mémoriser, par le dispositif mobile (2), un mot de passe de vérification généré par le serveur de vérification (1);
l'ensemble de données de vérification de référence des données d'authentification comporte les données d'identification de matériel de référence associées à un composant matériel du dispositif mobile (2), les données d'emplacement de référence indiquant un emplacement auquel a été localisé le dispositif mobile (2), les données d'image de référence associées à une image enregistrée capturée par le dispositif mobile (2) et un mot de passe de vérification de référence;
la génération de l'ensemble de données d'identification comporte le fait de
balayer le composant matériel du dispositif mobile (2) pour obtenir les données d'identification de matériel,
récupérer le mot de passe de vérification mémorisé dans le dispositif mobile (2),
en réaction à une opération par l'utilisateur, obtenir les données d'image et les données d'emplacement, et
générer l'ensemble de données d'identification à l'aide des données d'identification de matériel, du mot de passe de vérification, des données d'image et des données d'emplacement; et
la vérification de l'ensemble de données d'identification comporte le fait de
comparer les données d'identification de matériel, le mot de passe de vérification inclus dans l'ensemble de données d'identification, les données d'image et les données d'emplacement respectivement avec les données d'identification de matériel de référence, le mot de passe de vérification mémorisé dans le serveur de vérification (1), les données d'image de référence et les données d'emplacement de référence, et
déterminer que la demande de clé provient d'un utilisateur enregistré lorsque les données d'identification de matériel, le mot de passe de vérification inclus dans l'ensemble de données d'identification, les données d'image et les données d'emplacement sont respectivement identiques aux données d'identification de matériel de référence, au mot de passe de vérification mémorisé dans le serveur de vérification (1), aux données d'image de
référence et aux données d'emplacement de référence;
dans lequel:
le dispositif mobile (2) est configuré pour générer les données d'emplacement actuel associées à un emplacement actuel du dispositif mobile (2), et la demande de clé comporte par ailleurs les données d'emplacement actuel; et
lorsqu'il est déterminé que la demande de clé provient d'un utilisateur enregistré, le serveur de vérification (1) remplace par ailleurs les données d'emplacement de référence en utilisant les données d'emplacement actuel.

2. Procédé selon la revendication 1, le système (100) comportant par ailleurs un serveur de données (3), **caractérisé par le fait que** le procédé comporte par ailleurs, après réception et mémorisation du mot de passe de vérification, le fait de:
générer, par le dispositif mobile (2), les données de sauvegarde qui sont associées à l'utilisateur enregistré et qui comportent le nombre N-1 restant des parties de clé secrète et le mot de passe de vérification;
transmettre, par le dispositif mobile (2), les données de sauvegarde au serveur de données (3); et
mémoriser, par le serveur de données (3), les données de sauvegarde dans ce dernier.

3. Procédé selon la revendication 2, **caractérisé par le fait que** le procédé comporte par ailleurs, après qu'il a été déterminé que la demande de clé provient de l'utilisateur enregistré, le fait de:
générer, par le serveur de vérification (1), un nouveau mot de passe de vérification;
remplacer, par le serveur de vérification (1), le mot de passe de vérification de référence par le nouveau mot de passe de vérification; et
transmettre, par le serveur de vérification (1), le nouveau mot de passe de vérification ensemble avec l'une des parties de clé secrète ainsi décryptées au dispositif mobile (2).

4. Procédé selon la revendication 3, **caractérisé par le fait que** le procédé comporte par ailleurs le fait de:
en réaction à la réception du nouveau mot de passe de vérification, remplacer, par le dispositif mobile (2), le mot de passe de vérification y mémorisé en utilisant le nouveau mot de passe de vérification, et transmettre le nouveau mot de passe de vérification au serveur de données (3);
en réaction à la réception du nouveau mot de passe de vérification, remplacer, par le serveur de données (3), le mot de passe de vérification y mémorisé en utilisant le nouveau mot de passe de vérification.

5. Procédé selon la revendication 1, **caractérisé par le fait que** le procédé comporte par ailleurs, avant de générer la demande de clé, le fait de:
recevoir, par le dispositif mobile (2), du serveur de vérification (1) une pluralité d'images candidates comportant l'image enregistrée;
afficher, par le dispositif mobile (2), les images candidates et une instruction pour l'utilisateur de sélectionner l'image enregistrée parmi les images candidates et d'entrer un emplacement antérieur; et
recevoir, par le dispositif mobile (2), les données entrées par l'utilisateur qui indiquent une sélection de l'une des images candidates et l'emplacement antérieur.

6. Procédé selon la revendication 1, **caractérisé par le fait que** le procédé comporte par ailleurs le fait de:
obtenir, par le dispositif mobile (2), les données biométriques de référence relatives à l'utilisateur enregistré au cours du processus d'enregistrement; et
mémoriser, par le dispositif mobile (2), les données biométriques de référence et le PIN dans un composant de sécurité (26).

7. Procédé selon la revendication 6, **caractérisé par le fait que** le procédé comporte par ailleurs le fait de:
balayer, par le dispositif mobile (2), l'utilisateur pour obtenir les données biométriques balayées relatives à l'utilisateur;
comparer, par le dispositif mobile (2), les données biométriques balayées et les données biométriques de référence pour déterminer si l'utilisateur est l'utilisateur enregistré;
lorsqu'il a été déterminé que l'utilisateur est l'utilisateur enregistré, obtenir, par le dispositif mobile (2), le PIN du composant de sécurité (26); et
décrypter, par le dispositif mobile (2), le nombre N-1 des parties de clé secrète à l'aide du PIN.

8. Procédé selon la revendication 1, **caractérisé par le fait que** le procédé comporte par ailleurs le fait de:
avant de décrypter le nombre N-1 restant des parties de clé secrète, afficher, par le dispositif mobile (2), un message donnant instruction à l'utilisateur d'entrer le PIN;
en réaction à la réception d'un PIN entré par l'utilisateur, comparer, par le dispositif mobile (2), le PIN entré par l'utilisateur et le PIN du composant de sécurité (26); et
lorsqu'il a été déterminé que le PIN entré par l'utilisateur est identique au PIN du composant de sécurité (26), décrypter, par le dispositif mobile (2), le nombre N-1 des parties de clé secrètes à l'aide du PIN.

9. Système (100) de gestion de clés, comportant un serveur de vérification (1) et un dispositif mobile (2) communiquant avec ledit serveur de vérification (1) à travers un réseau, dans lequel:
ledit serveur de vérification (1) est configuré pour générer et mémoriser les données d'authentification qui sont attribuées à un utilisateur dudit dispositif mobile (2), les données d'authentification comportant un identificateur d'utilisateur unique, UID, une clé publique qui forme une paire de clés asymétriques avec un clé privée, l'une d'un nombre N de parties de clé secrète qui constituent la clé privée, et un ensemble de données de vérification de référence, l'une des parties de clé secrète étant mémorisée de forme cryptée;
ledit dispositif mobile (2) comporte un support de mémoire (21), une interface d'utilisateur (22) et un processeur (25) couplé audit support de mémoire (21) et à ladite interface d'utilisateur (22), ledit support de mémoire (21) mémorisant une application de logiciel et le nombre N-1 restant des parties de clé secrète de forme cryptée, chacune du nombre N-1 des parties de clé secrète étant cryptée à l'aide d'un numéro d'identification personnel, PIN;
en réaction à l'opération par l'utilisateur d'initier un processus de certification pour certifier un fichier de données cible dans ledit dispositif mobile (2), ledit processeur (25) exécutant l'application de logiciel est configuré pour générer et transmettre une demande de clé au serveur de vérification (1), la demande de clé comportant l'UID et un ensemble de données d'identification;
en réaction à la réception de la demande de clé, ledit serveur de vérification (1) est configuré pour vérifier l'ensemble de données d'identification pour déterminer si la demande de clé provient d'un utilisateur enregistré;
après qu'il a été déterminé que la demande de clé provient d'un utilisateur enregistré, ledit serveur de vérification (1) est configuré pour décrypter l'une des parties de clé secrète y mémorisée et pour transmettre l'une des parties de clé secrète ainsi décryptée audit dispositif mobile (2);
en réaction à la réception de l'une des parties de clé secrète ainsi décryptée, ledit dispositif mobile (2) est configuré pour décrypter le nombre N-1 restant des parties de clé secrète, générer la clé privée à l'aide du nombre N de parties de clé secrète ainsi décryptées, certifier le fichier de données cible à l'aide de la clé privée ainsi générée, et effacer l'enregistrement de la clé privée après le processus de certification;
**caractérisé par le fait que**:
ledit serveur de vérification (1) est configuré pour mémoriser les données d'authentification, et ledit dispositif mobile (2) est configuré pour mémoriser le nombre N-1 restant des parties de clé secrète au cours d'un processus d'enregistrement;
le PIN est un numéro entré par l'utilisateur reçu par ledit dispositif mobile (2) au cours d'un processus d'enregistrement; et
ledit dispositif mobile (2) est par ailleurs configuré pour recevoir et mémoriser un mot de passe de vérification généré par le serveur de vérification (1);
ledit dispositif mobile (2) comporte par ailleurs un module de capture d'image et un composant de positionnement connecté audit processeur;
l'ensemble de données de vérification de référence des données d'authentification comporte les données d'identification de matériel de référence associées à un composant matériel dudit dispositif mobile (2), les données d'emplacement de référence indiquant un emplacement auquel a été localisé ledit dispositif mobile (2), les données d'image de référence associées à une image enregistrée capturée par ledit module de capture d'image, et un mot de passe de vérification de référence;
ledit dispositif mobile (2) est configuré pour générer l'ensemble de données d'identification
en balayant le composant matériel dudit dispositif mobile (2) pour obtenir les données d'identification de matériel,
en récupérant le mot de passe de vérification mémorisé dans ledit dispositif mobile (2),
en réaction à une opération par l'utilisateur, en obtenant les données d'image et les données d'emplacement respectivement dudit module de capture d'image et dudit composant de positionnement, et
en générant l'ensemble de données d'identification à l'aide des données d'identification de matériel, du mot de passe de vérification, des données d'image et des données d'emplacement; et
ledit serveur de vérification (1) est configuré pour vérifier l'ensemble de données d'identification
en comparant les données d'identification de matériel, le mot de passe de vérification inclus dans l'ensemble de données d'identification, les données d'image et les données d'emplacement avec respectivement les données d'identification de matériel de référence, le mot de passe de vérification mémorisé dans ledit serveur de vérification (1), les données d'image de référence et les données d'emplacement de référence, et
en déterminant que la demande de clé provient d'un utilisateur enregistré lorsque les données d'identification de matériel, le mot de passe de vérification inclus dans l'ensemble de données d'identification, les données d'image et les données d'emplacement sont respectivement identiques aux données d'identification de matériel de référence, au mot de passe de vérification mémorisé dans ledit serveur de vérification (1), aux données d'image de référence et aux données d'emplacement de référence;
dans lequel ledit dispositif mobile (2) est configuré pour générer les données d'emplacement actuel associées à un emplacement actuel dudit dispositif mobile (2), et la demande de clé comporte par ailleurs les données d'emplacement actuel;
en réaction à la réception de la demande de clé et après qu'il a été déterminé que la demande de clé provient d'un utilisateur enregistré, ledit serveur de vérification (1) remplace par ailleurs les données d'emplacement de référence en utilisant les données d'emplacement actuel.

10. Système (100) selon la revendication 9, comportant par ailleurs un serveur de données (3), **caractérisé par le fait que**:
après réception et mémorisation du mot de passe de vérification, ledit dispositif mobile (2) est configuré pour générer les données de sauvegarde qui sont associées à l'utilisateur enregistré et qui comportent le nombre N-1 restant des parties de clé secrète et le mot de passe de vérification, et pour transmettre les données de sauvegarde au serveur de données (3); et
en réaction à la réception des données de sauvegarde, ledit serveur de données (3) est configuré pour y mémoriser les données de sauvegarde.

11. Système (100) selon la revendication 10, **caractérisé par le fait qu'**après qu'il a été déterminé que la demande de clé provient de l'utilisateur enregistré:
ledit serveur de vérification (1) est configuré pour générer un nouveau mot de passe de vérification, remplacer le mot de passe de vérification de référence par le nouveau mot de passe de vérification, et transmettre audit dispositif mobile (2) le nouveau mot de passe de vérification ensemble avec l'une des parties de clé secrète ainsi décryptée.

12. Système (100) selon la revendication 11, **caractérisé par le fait que**:
en réaction à la réception du nouveau mot de passe de vérification, ledit dispositif mobile (2) est configuré pour remplacer le mot de passe de vérification y mémorisé en utilisant le nouveau mot de passe de vérification, et transmettre le nouveau mot de passe de vérification audit serveur de données (3);
en réaction à la réception du nouveau mot de passe de vérification, ledit serveur de données (3) est configuré pour remplacer le mot de passe de vérification y mémorisé en utilisant le nouveau mot de passe de vérification.

13. Système (100) selon la revendication 9, **caractérisé par le fait que**, avant de générer la demande de clé,
ledit dispositif mobile (2) reçoit une pluralité d'images candidates comportant l'image enregistrée du serveur de vérification (1) et est configuré pour afficher les images candidates et une instruction pour l'utilisateur de sélectionner l'image enregistrée parmi les images candidates et d'entrer un emplacement antérieur, et
ledit dispositif mobile (2) reçoit par ailleurs les données entrées par l'utilisateur qui indiquent une sélection de l'une des images candidates et l'emplacement antérieur.

14. Système (100) selon la revendication 9, **caractérisé par le fait que** ledit dispositif mobile (2) est par ailleurs configuré pour obtenir les données biométriques de référence relatives à l'utilisateur enregistré au cours du processus d'enregistrement, pour mémoriser les données biométriques de référence et le PIN dans un composant de sécurité (26).

15. Système (100) selon la revendication 14, **caractérisé par le fait que** ledit dispositif mobile (2) est par ailleurs configuré pour:
balayer l'utilisateur pour obtenir les données biométriques balayées relatives à l'utilisateur;
comparer les données biométriques balayées et les données biométriques de référence pour déterminer si l'utilisateur est l'utilisateur enregistré;
lorsqu'il est déterminé que l'utilisateur est l'utilisateur enregistré, obtenir le PIN du composant de sécurité (26); et
décrypter le nombre N-1 des parties de clé secrète à l'aide du code PIN.

16. Système (100) selon la revendication 9, **caractérisé par le fait que**:
avant de décrypter le nombre N-1 restant des parties de clé secrète, ledit dispositif mobile (2) est configuré pour afficher un message donnant instruction à l'utilisateur d'entrer le PIN;
en réaction à la réception d'un PIN entré par l'utilisateur, ledit dispositif mobile (2) est configuré pour comparer le PIN entré par l'utilisateur et le PIN du composant de sécurité (26); et
lorsqu'il est déterminé que le PIN entré par l'utilisateur est identique au PIN du composant de sécurité (26), ledit dispositif mobile (2) est configuré pour décrypter le nombre N-1 des parties de clé secrète à l'aide du PIN.
